# EUROPEAN PATENT APPLICATION

(11) **EP 3 043 344 A1**
(43) Date of publication of application: **13.07.2016**
(21) Application number: 15191814.1
(22) Date of filing: 28.10.2015
(51) Int. Cl.: G09G 5/10, H04N 5/57

(54) **DISPLAY APPARATUS AND DISPLAY METHOD FOR DISPLAYING IMAGE**

(30) Priority: 06.01.2015 KR 20150001079
(71) Applicant: Samsung Electronics Co., Ltd., Gyeonggi-do 16677 (KR)
(72) Inventor: KANG, Jin-sung, Gyeonggi-do (KR); JANG, Sung-hwan, Gyeonggi-do (KR)
(74) Representative: Appleyard Lees IP LLP

(57) **Abstract**

A display apparatus (100) and a display method for displaying an image. The display method includes: receiving image frames (S510); detecting motion values of front and back image frames of the received image frames (S520); analyzing the detected motion values to determine whether a scene change occurs within a preset time unit (S530); and adjusting a brightness value of an image frame to be displayed according to whether the scene change occurs (S540). Therefore, the display apparatus improves a loss of a contrast ratio occurring when varying a brightness of an image frame each time interval on an occurrence of a scene change and improves a viewing visual brightness.

## Description

### CROSS-REFERENCE TO RELATED APPLICATION

This application claims priority under 35 U.S.C. § 119 from Korean Patent Application No. 10-2015-0001079, filed on January 6, 2015, in the Korean Intellectual Property Office, the disclosure of which is incorporated herein by reference in its entirety.

### BACKGROUND

### 1. Field

A method and an apparatus consistent with exemplary embodiments broadly relate to providing a display apparatus and a display method for displaying an image, and more particularly to providing a display apparatus and a display method for displaying an image taking into consideration an occurrence of a scene change.

### 2. Description of the Related Art

In general, a scene change refers to a phenomenon in which after one of consecutive scenes of an image ends, another scene starts. Therefore, if a scene change rapidly occurs between front and back image frames, image quality setups, such as a color temperature, a color density, a color, a definition, a brightness, a contrast, etc., may be changed based on a corresponding environment.

For this, if a plurality of image frames are input, an existing display apparatus adjusts a brightness of an image quality by using only brightness information of the input image frames. In detail, the existing display apparatus detects a motion value from a sum of brightness differences of pixels between image frames of respective fractions. The existing display apparatus compares the motion value detected from the image frames of the respective fractions with a preset reference value to vary brightness of the image frames of the respective fractions.

However, the existing display apparatus varies the brightness of the image frames of the respective fractions based on the motion value detected from the image frames of the respective fractions and a fixed reference value. Therefore, a loss problem of a contrast ratio occurs.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

Exemplary embodiments may provide an improvement of a contrast ratio loss that occurs when varying a brightness of an image frame of each fraction in an occurrence of a scene change and an improvement of a viewing visual brightness.

According to an aspect of exemplary embodiments, there is provided a method of displaying an image including: receiving image frames; detecting motion values of front and back ones of the received image frames; determining whether a scene change occurs within a preset time based on the detected motion values; and adjusting a brightness value of an image frame, from among the plurality of image frames, to be displayed, based on the determining whether the scene change occurs.

The motion values of the front and back image frames may be detected from a sum of brightness differences of pixels constituting the front and back image frames.

In response to the detected motion values being higher than or equal to a reference value, the determining may yield that the scene change occurs between the front and back image frames.

The method may further include: calculating a number of scene changes occurring within the preset time; and adjusting the reference value for determining whether the scene change occurs within the preset time, based on the calculated number of scene changes.

In response to the calculated number of scene changes being higher than or equal to a threshold value, decreasing the reference value or maintaining the reference value unchanged. In response to the calculated number of scene changes being lower than the threshold value, increasing the reference value.

The adjusting the brightness value may include: comparing a motion value, from the detected motion values, of the image frame with the adjusted reference value, in response to the compared motion value being higher than or equal to the adjusted reference value, decreasing the brightness value of the image frame, and in response to the compared motion value of the image frame being lower than the adjusted reference value, increasing the brightness value of the image frame.

The method may further include: readjusting the adjusted reference value based on the brightness value of the image frame and an average brightness value of the image frame. The brightness value of the image frame may be readjusted based on the readjusted reference value and the motion value of the image frame.

The readjusting of the adjusted reference value may include: in response to the brightness value of the image frame being higher than or equal to the adjusted reference value and the average brightness value of the image frame being higher than or equal to an average threshold value of the average brightness value, increasing the adjusted reference value; in response to the brightness value of the image frame being higher than or equal to the adjusted reference value and the average brightness value of the image frame being lower than the average threshold value of the average brightness value, lowering the adjusted reference value; and in response to the brightness value of the image frame being lower than the adjusted reference value, increasing the reference value.

According to another aspect of exemplary embodiments, there is provided a display apparatus including: an image input interface configured to receive a number of image frames; a motion detector configured to detect motion values of front and back ones of the received image frames; and a controller configured to determine whether a scene change occurs within a preset time based on the detected motion values and adjust a brightness value of an image frame, from among the number of image frames, to be displayed, based on the determining whether the scene change occurs.

The motion detector may detect the motion values of the front and back image frames from a sum of brightness differences of pixels constituting the front and back image frames.

In response to the motion detector detecting that the motion values are higher than or equal to a reference value, the controller may determine that the scene change occurs between the front and back image frames.

The controller may calculate a number of scene changes occurring within the preset time and adjust the reference value for determining whether the scene change occurs within the preset time, based on the calculated number of scene changes.

In response to the controller determining that the number of scene changes is higher than or equal to a threshold value, the controller may decrease the reference value or maintain the reference value unchanged, and in response to the controller determining that the number of scene changes is lower than the threshold value, the controller may increase the reference value.

The controller may compare a motion value, from among the motion values detected by the motion detector, of the image frame with the adjusted reference value, in response to the motion value of the image frame being higher than or equal to the adjusted reference value as compared by the controller, the controller may decrease the brightness value of the image frame, and in response to the motion value of the image frame being lower than the adjusted reference value as compared by the controller, the controller may increase the brightness value of the image frame.

The controller may readjust the adjusted reference value based on the brightness value and an average brightness value of the image frame and may readjust the brightness value of the image frame based on the readjusted reference value and the motion value of the image frame detected by the motion detector.

In response to the brightness value of the image frame being higher than or equal to the readjusted reference value and the average brightness value of the image frame being higher than or equal to an average threshold value of the average brightness value, the controller may decrease the readjusted reference value. In response to the brightness value of the image frame being higher than or equal to the readjusted reference value and the average brightness value of the image frame being lower than the average threshold value of the average brightness value, the controller may increase the readjusted reference value. In response to the brightness value of the image frame being lower than the readjusted reference value, the controller may increase the readjusted reference value.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating a configuration of a display apparatus according to an exemplary embodiment;
FIG. 2 is a block diagram illustrating a configuration of a display apparatus according to an exemplary embodiment;
FIG. 3 is a block diagram illustrating a controller according to an exemplary embodiment;
FIG. 4 is a graph illustrating a distribution of input image frames in a display apparatus according to an exemplary embodiment;
FIG. 5 is a flowchart illustrating a method of displaying an image using a display apparatus according to an exemplary embodiment;
FIG. 6 is a flowchart illustrating a method of adjusting a reference value for adjusting a brightness value of an image frame according to an exemplary embodiment; and
FIG. 7 is a flowchart illustrating a method of readjusting a reference value to readjust a brightness value of an image frame according to an exemplary embodiment.

### DETAILED DESCRIPTION OF EXEMPLARY EMBODIMENTS

Exemplary embodiments are described in greater detail with reference to the accompanying drawings.

In the following description of exemplary embodiments, the same drawing reference numerals are used to denote analogous elements even in different drawings. The matters defined in exemplary embodiments, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

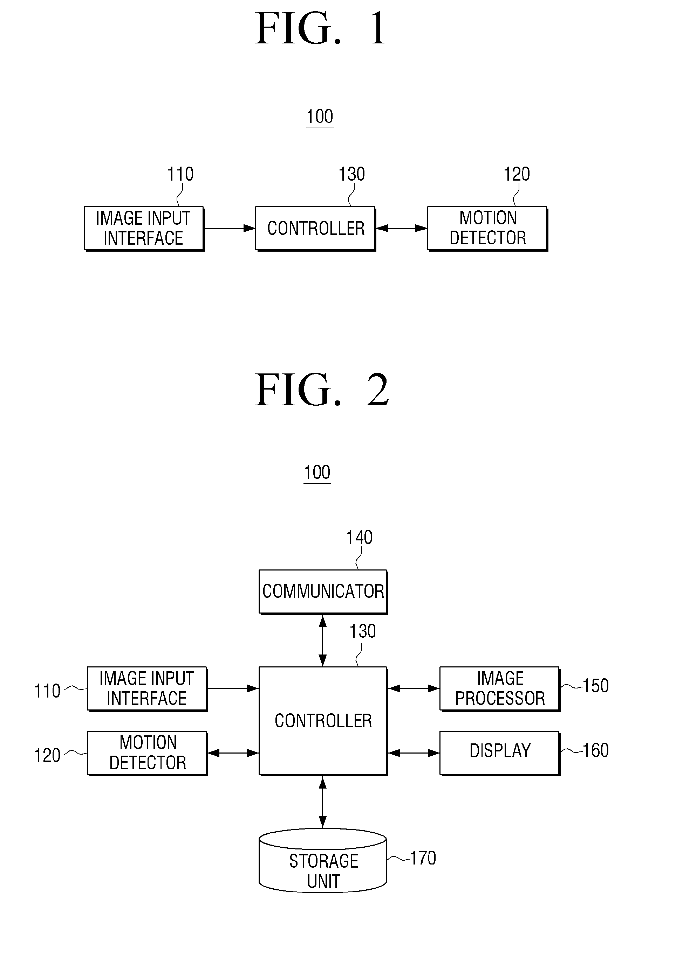

FIG. 1 is a block diagram illustrating a display apparatus 100 according to an exemplary embodiment.

As shown in FIG. 1, the display apparatus 100 may be an apparatus that may display an image received from an external device or a pre-stored image, like a smartphone, a tablet PC, or a smart TV. The display apparatus 100 includes an image input interface 110, a motion detector 120, and a controller 130.

The image input interface 110 receives a plurality of image frames of an image to be displayed (e.g. a moving image, such as a video). The motion detector 120 detects motion values from front and back image frames input through the image input interface 110. The controller 130 controls overall operations of the elements of the display apparatus 100. In particular, in an exemplary embodiment, the controller 130 analyzes the motion values detected by the motion detector 120 to determine whether a scene change occurs in each preset time unit or period of time and adjusts a brightness value of an image frame to be displayed, according to the determination result.

In detail, according to an exemplary embodiment, if front and back image frames are input through the image input interface 110, the motion detector 120 detects motion values of the front and back image frames from a sum of brightness differences of pixels constituting the input front and back image frames.

According to exemplary embodiments, a first image frame may be input, and then a second image frame may be input through the image input interface 110. If consecutive first and second image frames are input, as described above, the motion detector 120 acquires a difference between brightness of pixels of the first image frame and brightness of pixels of the second image frame. The motion detector 120 may sum values of the differences of the pixels of the first and second image frames to detect the summed result value as a motion value of the first and second image frames.

According to an exemplary embodiment, if the motion values of the front and back image frames are detected, the controller 130 may determine whether the motion values detected from the front and back image frames are higher than or equal to a preset reference value and adjust a brightness value of an image frame to be displayed, based on the determination result.

In detail, if the motion values detected from the front and back image frames are higher than or equal to the preset reference value, the controller 130 determines that a scene change occurred between the front and back image frames. The controller 130 repeatedly performs a series of operations, as described above, to calculate the number of scene changes occurring within a preset unit or period of time. The controller 130 adjusts a reference value for determining whether a scene change occurs within a preset unit or period of time, based on the number of scene changes calculated within the preset unit or period of time. In other words, according to an exemplary embodiment, the controller 130 may adjust a reference value that is set to determine whether an input image frame is a motion image or a still image, based on the number of scene changes calculated within the preset unit or period of time.

According to exemplary embodiments, if the number of scene changes calculated within the preset unit or period of time is higher than or equal to a preset threshold value, the controller 130 may lower a reference value for determining whether a scene change occurs, by a value of a preset level or may keep the reference value. If the number of scene changes calculated within the preset unit time is lower than the preset threshold value, the controller 130 increases the reference value for determining whether the scene change occurs, by a value of a preset level.

If the reference value for determining whether the scene change occurs is adjusted based on the above-described conditions, the controller 130 adjusts a brightness value of a corresponding image frame base on the adjusted reference value and a motion value of an input image frame.

According to one or more exemplary embodiments, the controller 130 compares the adjusted reference value with a motion value of a first image frame to be displayed and, if the motion value of the first image frame is higher than or equal to the adjusted reference value, decreases a brightness value of the first image frame. Here, if the motion value of the first image frame is higher than or equal to the adjusted reference value, the controller 130 may decrease the brightness value of the first image frame within a preset minimum brightness value.

If the motion value of the first image frame is lower than the adjusted reference value, the controller 130 increases the brightness value of the first image frame to be displayed. Here, if the motion value of the first image frame is lower than the adjusted reference value, the controller 130 may increase the brightness value of the first image frame within a preset maximum brightness value.

As described above, according to an exemplary embodiment, the display apparatus 100 may adjust a reference value for determining whether an input image frame is a motion image or a still image based on the number of scene changes occurring within a preset unit or period of time. Also, the display apparatus 100 adjust a brightness value of the input image frame based on the adjusted reference value to minimize a loss of a contrast ratio and provide a high visual brightness.

According to yet another exemplary embodiment, the controller 130 may adjust a reference value for determining whether an input image frame is a motion image or a still image.

In detail, the controller 130 may readjust an adjusted reference value based on a brightness value of an image frame increasing or decreasing based on the adjusted reference value and an average brightness value of the corresponding image frame. As described above, according to an exemplary embodiment, the controller 130 compares a motion value of a first image frame to be displayed with the adjusted reference value, if the motion value of the first image frame is higher than or equal to the adjusted reference value, decreases a brightness value of the first image frame, and if the motion value of the first image frame is lower than the adjusted reference value, increases the brightness value of the first image frame.

If the brightness value of the first image frame is adjusted based on the motion value of the first image frame and the adjusted reference value, as described above, the controller 130 readjusts the adjusted reference value based on the adjusted brightness value of the first image frame and an average brightness value of the first image frame.

In detail, according to an exemplary embodiment, if the brightness value of the first image frame is higher than or equal to the adjusted reference value, and the average brightness value of the first image frame is higher than or equal to an average threshold value of the corresponding average brightness value, the controller 130 increases the adjusted reference value by a value of a preset level. If the brightness value of the first image frame is higher than or equal to the adjusted reference value, and the average brightness value of the first image frame is lower than the average threshold value of the corresponding average brightness value, the controller 130 lowers the adjusted reference value by a value of a preset level. If the brightness value of the first image frame is lower than the adjusted reference value, the controller 130 lowers the adjusted reference value by the value of the preset level.

The controller 130 may compare the motion value of the first image frame with the readjusted reference value, if the motion value of the first image frame is higher than or equal to the readjusted reference value, decrease the brightness value of the first image frame, and if the motion value of the first image frame is lower than the readjusted reference value, increase the brightness value of the first image frame.

As described above, according to an exemplary embodiment, the display apparatus 100 may adjust a reference value for determining whether an input image frame is a motion image or a still image according to the number of scene changes occurring within a unit or a period of time. Also, the display apparatus 100 may increase or decrease a brightness value of an image to be displayed based on the adjusted reference value so as to improve an average brightness of the input image frame.

The display apparatus 100, which displays an image frame by using a brightness value adjusted based on a motion value of an input image frame and a preset reference value, may further include additional elements that will be described below, according to an exemplary embodiment.

FIG. 2 is a block diagram illustrating a display apparatus according to an exemplary embodiment.

As shown in FIG. 2, the display apparatus 100 may include a communicator 140, an image processor 150, a display 160, and a storage 170 and also include an image input interface 110, a motion detector 120, and a controller 130 such as the ones described above with reference to FIG. 1.

The communicator 140 may perform a data communication with an external device (not shown) to receive a plurality of image frames of an image from the external device. The communicator 140 may include a wireless communication module and a wire (e.g. wired) communication module. Here, the wire communication module may be a universal serial bus (USB) communication module that provides an interface with the external device, and the wireless communication module may include at least one selected from a short range communication module and a long range communication module. The short range communication module may include at least one selected from a WIFI direct communication module, a Bluetooth module, an infrared data association (IrDA) module, a near field communication (NFC) module, and a Zigbee module. The long range communication module may include at least one selected from a cellular communication module, a 3rd generation (3G) mobile communication module, a 4th generation (4G) mobile communication module, and a 4G long term evolution (LTE) communication module.

The image processor 150 converts an image frame input via the image input interface 110 into YCbCr data, determines an image black level, and adjusts a sensitivity ratio of each color. The image processor 150 may also perform a white balance, a gamma correction, a color interpolation, a color correction, a resolution conversion, etc. on the input image frame, according to an exemplary embodiment. Therefore, the motion detector 120 may acquire brightness differences of pixels of front and back image frames, which are image-processed through the image processor 150, and detect motion values of the front and back image frames from a sum of the brightness differences.

The display 160 displays an image, in particular, may display an image frame, a brightness value of which is adjusted by the controller 130, according to an exemplary embodiment. In addition, the display 160 may upscale or downscale an image frame to be displayed based on a screen size of the display apparatus 100, convert frame rates of scaled image frames with reference to a display rate, and display an image. The display 160 may be realized as a liquid crystal display (LCD), an organic light-emitting display, a plasma display panel (PDP), or the like.

The storage 170 may be a storage medium (e.g., a memory) that stores various types of programs, etc. necessary for operating the display apparatus 100. In particular, in an exemplary embodiment, the storage 170 may store a reference value that is set to determine whether a scene change occurs within each preset time unit or period of time. The storage 170 may include a read only memory (ROM) for storing a program for performing an operation of the controller 130, a random access memory (RAM) for temporarily storing data generated by a performance of the operation of the controller 130, etc. The storage 170 may further include an electrically erasable and programmable ROM (EEROM) for storing various types of reference data.

Elements of the controller such as the controller 130, described above, will now be described in detail, according to an exemplary embodiment.

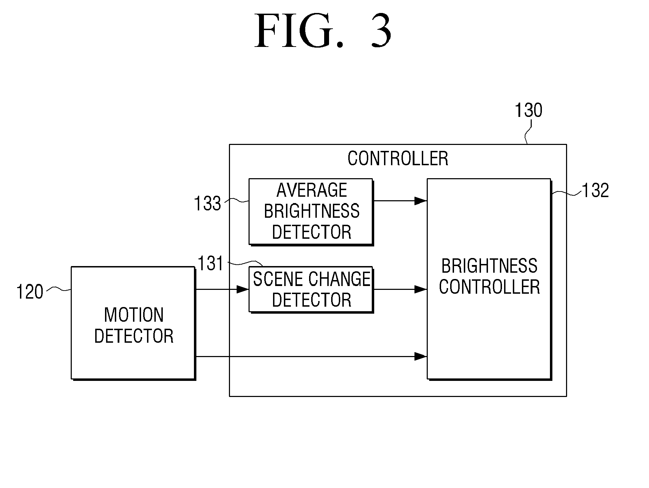

FIG. 3 is a block diagram illustrating a controller according to an exemplary embodiment.

Referring to FIG. 3, the controller 130 may include a scene change detector 131, a brightness controller 132, and an average brightness detector 133.

If motion values of front and back image frames detected through the motion detector 120 are higher than or equal to a preset reference value, for example as described above, the scene change detector 131 determines that a scene change occurs between the front and back image frames. The scene change detector 131 determines whether scene changes of a plurality of image frames included within a preset time unit or a predetermined period of time occur.

If the scene change detector 131 determines whether the scene changes of the plurality of image frames within the preset time unit occur, the brightness controller 132 adjusts a reference value for determining whether a scene change occurs within a preset unit time or a predetermined period of time, based on the number of scene changes occurring within the preset time unit or a predetermined period of time.

In detail, if the number of scene changes occurring within the preset time unit or a predetermined period of time is higher than or equal to a preset threshold value, the brightness controller 132 lowers a preset reference value by a preset size or a preset amount, or keeps the preset reference value. If the number of scene changes occurring within the preset unit time or a predetermined period of time is lower than the preset threshold value, the brightness controller 132 increases the reference value for determining whether the scene change occurs, by a preset size or amount. The brightness controller 132 compares a motion value of an image frame to be displayed with the adjusted reference value and, if the motion value of the image frame is higher than or equal to the adjusted reference value, decreases a brightness value of the image frame by a preset size. If the motion value of the image frame to be displayed is lower than the adjusted reference value, the brightness controller 132 increases the brightness value of the image frame by a preset size.

If an average brightness value of the image frame to be displayed is input through the average brightness detector 133, the brightness controller 132 readjusts the adjusted reference value based on the brightness value that decreases or increases based on the input average brightness value and the adjusted reference value.

In detail, according to an exemplary embodiment, if the brightness value of the image frame to be displayed is higher than or equal to the adjusted reference value, and the average brightness value of the image frame is higher than or equal to an average threshold value of the average brightness value, the brightness controller 132 increases the adjusted reference value by a preset size or amount. If the brightness value of the image frame to be displayed is higher than or equal to the adjusted reference value, and the average brightness value of the image frame is lower than the average threshold value, the brightness controller 132 decreases the adjusted reference value by a preset size or amount. If the brightness value of the image frame to be displayed is lower than the adjusted reference value, the brightness controller 132 increases the adjusted reference value by a preset size or amount.

If the adjusted reference value is readjusted, for example, as described above, the brightness controller 132 may compare a motion value of the image frame to be displayed with the readjusted reference value. Also, the brightness controller 132 may decrease the brightness value of the image frame by a preset size if the motion value of the image frame is higher than or equal to the readjusted reference value and increase the brightness value of the image frame by a preset size or amount if the motion value of the image frame is lower than the readjusted reference value.

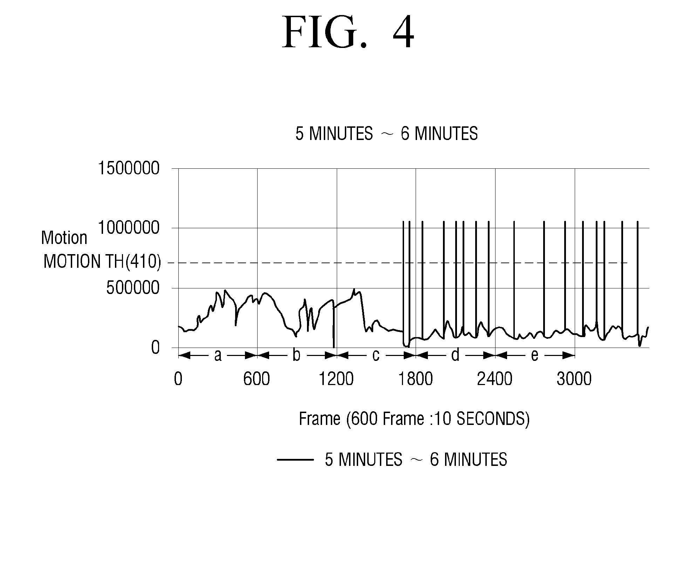

FIG. 4 is a graph illustrating a distribution of input image frames in a display apparatus, according to an exemplary embodiment.

As shown in FIG. 4, the display apparatus 100 may receive a plurality of image frames through the image input interface 110. For example, if 600 image frames are input at 10-second intervals, image frames having motion values lower than a reference value may be input in fractions a and b based on a preset reference value (motion th) 410, and ones of a plurality of image frames having motion values higher than or equal to the reference value may be input in fractions c through e. In this case, the brightness controller 132 calculates the number of scene changes occurring in each fraction and lowers or increases the reference value by a preset size or amount based on the number of scene changes calculated in each fraction.

As shown in FIG. 4, if the number of scene changes occurring in the fractions c through e is higher than or equal to a preset threshold value, the brightness controller 132 lowers the reference value of the fractions c through e by a preset size or amount or keeps the reference value. If the number of scene changes is lower than the preset threshold value, the brightness controller 132 may increase a reference value of the fractions a and b by a preset size or amount.

If a reference value of each fraction is adjusted according to the number of scene changes calculated in each fraction, the brightness controller 132 may compare a motion value of an image frame of each fraction with the adjusted reference value of each fraction, decrease a brightness value of an image frame having a motion value higher than or equal to the adjusted reference value, and increase a brightness value of an image frame having a motion value lower than the adjusted reference value.

The elements of the display apparatus 100 according to an exemplary embodiment have been described in detail. A method of displaying an image through the display apparatus 100 according to an exemplary embodiment will now be described in detail.

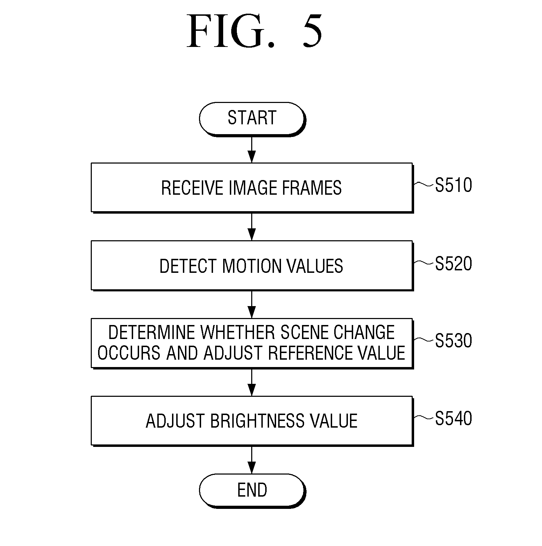

FIG. 5 is a flowchart illustrating a method of displaying an image according to an exemplary embodiment.

Referring to FIG. 5, in operation S510, a plurality of image frames of an image to be displayed are input. In operation S520, the display apparatus 100 detects motion values of the plurality of image frames. In detail, if a plurality of image frames of an image to be displayed are input, the display apparatus 100 detects motion values from the input front and back image frames. According to exemplary embodiments, the display apparatus 100 may detect motion values of front and back image frames from a sum of brightness differences of pixels constituting the front and back image frames.

If the motion values of the front and back image frames are detected, the display apparatus 100 analyzes the detected motion values to determine whether a scene change occurs within each preset unit time or amount of time and adjusts a reference value for determining whether the scene change occurs within a (e.g. subsequent) preset unit time or amount of time, based on the determination result in operation S530. In detail, if the motion values detected from the input front and back image frames are higher than or equal to a preset reference value, the display apparatus 100 determines that a scene change occurs between the front and back image frames. The display apparatus 100 repeatedly performs a series of operations, such as the one described above, to calculate the number of scene changes occurring within a preset unit time or period of time and adjusts the reference value for determining whether the scene change occurs within the preset unit time or period of time, based on the number of scene changes. In operation S540, the display apparatus 100 adjusts the adjusted reference value and a brightness value of an image frame to be displayed. Therefore, the display apparatus 100 may display an image frame based on the adjusted brightness value, according to an exemplary embodiment.

A method of adjusting a reference value for determining whether a scene change occurs within a preset unit or period of time using the display apparatus 100 according to an exemplary embodiment will now be described in detail.

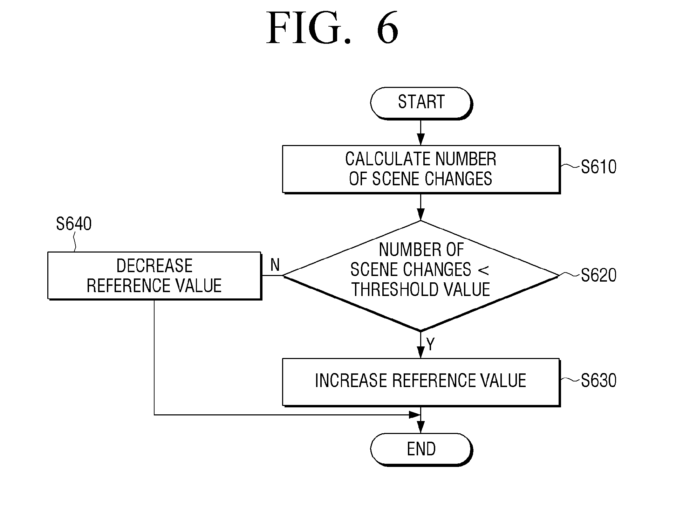

FIG. 6 is a flowchart illustrating a method of adjusting a reference value for adjusting a brightness value of an image frame, according to an exemplary embodiment.

Referring to FIG. 6, in operation S610, the display apparatus 100 calculates the number of scene changes occurring within a preset unit or period of time. If motion values detected from input front and back image frames are higher than or equal to a preset reference value, such as the ones described above, the display apparatus 100 determines that a scene change occurs between the input front and back image frames. The display apparatus 100 may repeatedly perform a series of operations, such as the ones described above, to calculate the number of scene changes occurring within the preset unit or period of time (e.g. over or for which the frames are input/processed).

If the number of scene changes occurring within the preset unit or period of time is calculated, the display apparatus 100 adjusts a reference value for determining whether the scene change occurs within the/a (e.g. subsequent) preset unit or period of time, based on the number of scene changes. In detail, according to an exemplary embodiment, if the number of scene changes occurring within the preset unit or period of time is calculated, the display apparatus 100 determines whether the number of scene changes is lower than a preset threshold value in operation S620.

If it is determined that the number of scene changes is lower than the preset threshold value, the display apparatus 100 increases the reference value for determining whether the scene change occurs, by a value of a preset level or amount, in operation S630. If the number of scene changes is higher than or equal to the preset threshold value, the display apparatus 100 lowers the reference value for determining whether the scene change occurs, by a value of a preset level or amount or keeps the reference value as is, in operation S640.

If the reference value for determining whether the scene change occurs is adjusted based on the above-described exemplary condition, the display apparatus 100 adjusts a brightness value of a corresponding image frame based on the adjusted reference value and a motion value of an input image frame, such as the one described above with reference to operation S540.

According to exemplary embodiments, the display 100 may compare a motion value of a first image frame to be displayed with an adjusted reference value. If the motion value of the first image frame is higher than or equal to the adjusted reference value, the display apparatus 100 may decrease a brightness value of the first image frame. Here, according to an exemplary embodiment, the display apparatus 100 may decrease the brightness value of the first image frame within a preset minimum brightness value. If the motion value of the first image frame to be displayed is lower than the adjusted reference value, the display apparatus 100 increases the brightness value of the first image frame. Here, according to an exemplary embodiment, the display apparatus 100 may increase the brightness value of the first image frame within a preset maximum brightness value.

As described above, according to an exemplary embodiment, the display apparatus 100 may adjust a reference value for determining whether an input image frame is a motion image or a still image (i.e. if there is or are one or more scene changes), based on the number of scene changes occurring within a (e.g. previous) preset unit or period of time. The display apparatus 100 may also adjust a brightness value of the input image frame based on the adjusted reference value so as to minimize a loss of a contrast ratio and provide a high visual brightness.

The display apparatus 100 may readjust the adjusted reference value based on a brightness value of an image frame (hereinafter referred to as a first image frame) that decreases or increases based on the adjusted reference value and an average brightness value of the first image frame.

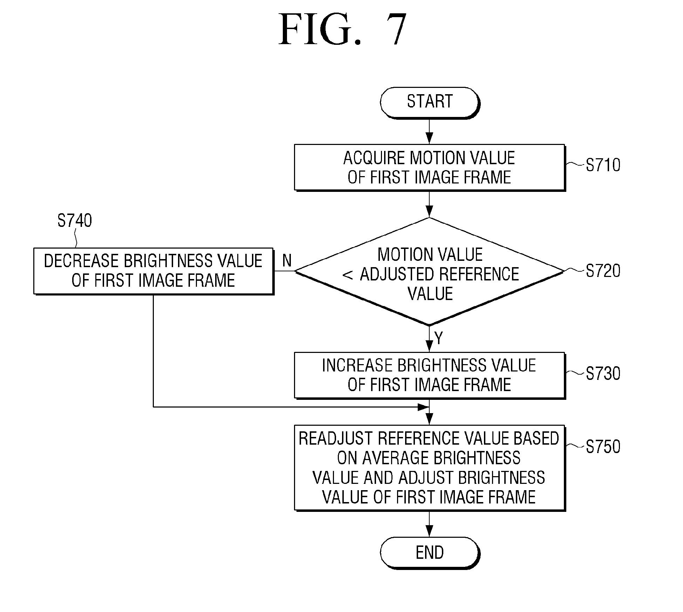

FIG. 7 is a flowchart illustrating a method of readjusting a reference value that is adjusted to adjust a brightness value of an image frame, according to an exemplary embodiment.

Referring to FIG. 7, in operation S710, the display apparatus 100 acquires a motion value of a first image frame to be displayed. In operation S720, the display apparatus 100 compares the motion value of the first image frame with an adjusted reference value. If the motion value of the first image frame is lower than the adjusted reference value according to the comparison result, the display apparatus 100 increases a brightness value of the first image frame in operation S730. If the motion value of the first image frame is higher than or equal to the adjusted reference value, the display apparatus 100 decreases the brightness value of the first image frame in operation S740.

If the brightness value of the first image frame is adjusted based on the motion value of the first image frame and the adjusted reference value, the display apparatus 100 readjusts the adjusted reference value based on the adjusted brightness value of the first image frame and an average brightness value of the first image frame in operation S750. In detail, according to an exemplary embodiment, if the brightness value of the first image frame is higher than or equal to the adjusted reference value, and the average brightness value of the first image frame is higher than or equal to an average threshold value of the average brightness value, the display apparatus 100 increases the adjusted reference value by a value of a preset level or size. If the brightness value of the first image frame is higher than or equal to the adjusted reference value, and the average brightness value of the first image frame is lower than the average threshold value of the average brightness value, the display apparatus 100 lowers the adjusted reference value by a value of a preset level or size. If the brightness value of the first image frame is lower than the adjusted reference value, the display apparatus 100 lowers the adjusted reference value by a value of a preset level or size.

The display apparatus 100 may compare the motion value of the first image frame with the readjusted reference value, if the motion value of the first image frame is higher than or equal to the readjusted reference value, decrease the brightness value of the first image frame, and if the motion value of the first image frame is lower than the readjusted reference value, increase the brightness value of the first image frame.

As described above, according to an exemplary embodiment, the display apparatus 100 may adjust a reference value for determining whether an input image frame is a motion image or a still image, according to the number of scene changes occurring each unit or period of time. The display apparatus 100 may also increase or decrease a brightness value of an image frame to be displayed, based on the adjusted reference value so as to improve an average brightness of an input image frame.

According to various exemplary embodiments, described above, a display apparatus may adjust a reference value for determining whether an input image frame is a motion image or a still image based on the number of scene changes. The display apparatus may also adjust a brightness value of the input image frame based on the adjusted reference value so as to minimize a loss of a contrast ratio and provide a high visual brightness.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying an image comprising:
receiving a plurality of image frames (S510);
detecting motion values of front and back image frames of the received plurality of image frames (S520);
determining whether a scene change occurs within a preset time based on the detected motion values (S530); and
adjusting a brightness value of an image frame, from among the received plurality of image frames, to be displayed, based on the determining whether the scene change occurs (S540).

2. The method of claim 1, wherein the motion values of the front and back image frames are detected from a sum of brightness differences of pixels constituting the front and back image frames.

3. The method of claim 1 or 2, wherein, in response to the detected motion values being higher than or equal to a reference value, the determining yields that the scene change occurs between the front and back image frames.

4. The method of claim 3, further comprising:
calculating a number of scene changes occurring within the preset time; and
adjusting the reference value for determining whether the scene change occurs within the preset time based on the calculated number of scene changes.

5. The method of claim 4, wherein the adjusting the reference value comprises:
in response to the calculated number of scene changes being higher than or equal to a threshold value, performing one of decreasing the reference value or keeping the reference value unchanged; and
in response to the calculated number of scene changes being lower than the threshold value, increasing the reference value.

6. The method of claim 5, wherein the adjusting the brightness value comprises:
comparing a motion value, from the detected motion values, of the image frame with the adjusted reference value,
in response to the compared motion value of the image frame being higher than or equal to the adjusted reference value, decreasing the brightness value of the image frame, and
in response to the compared motion value of the image frame being lower than the adjusted reference value, increasing the brightness value of the image frame.

7. The method of claim 6, further comprising:
readjusting the adjusted reference value based on the brightness value of the image frame and an average brightness value of the image frame,
wherein the brightness value of the image frame is readjusted based on the readjusted reference value and the motion value of the image frame.

8. The method of claim 7, wherein the readjusting the adjusted reference value comprises:
in response to the brightness value of the image frame being higher than or equal to the adjusted reference value and the average brightness value of the image frame being higher than or equal to an average threshold value of the average brightness value, increasing the adjusted reference value;
in response to the brightness value of the image frame being higher than or equal to the adjusted reference value and the average brightness value of the image frame being lower than the average threshold value of the average brightness value, lowering the adjusted reference value; and
in response to the brightness value of the image frame being lower than the adjusted reference value, increasing the adjusted reference value.

9. A display apparatus (100) comprising:
an image input (110) interface configured to receive a plurality of image frames;
a motion detector (120) configured to detect motion values of front and back image frames of the received plurality of image frames; and
a controller (130) configured to determine whether a scene change occurs within a preset time based on the detected motion values and adjust a brightness value of an image frame, from among the received plurality of image frames, to be displayed, based on the determining whether the scene change occurs.

10. The display apparatus of claim 9, wherein the motion detector detects the motion values of the front and back image frames from a sum of brightness differences of pixels constituting the front and back image frames.

11. The display apparatus of claim 9 or 10, wherein, in response to the motion detector detecting that the motion values are higher than or equal to a reference value, the controller determines that the scene change occurs between the front and back image frames.

12. The display apparatus of claim 11, wherein the controller is further configured to calculate a number of scene changes occurring within the preset time and adjust the reference value for determining whether the scene change occurs within the preset time, based on the calculated number of scene changes.

13. The display apparatus of claim 12, wherein in response to the controller determining that the number of scene changes is higher than or equal to a threshold value, the controller is configured to perform one of: decrease the reference value and maintain the reference value unchanged, and
wherein, in response to the controller determining that the number of scene changes is lower than the threshold value, the controller is configured to increase the reference value.

14. The display apparatus of claim 13, wherein the controller is configured to compare a motion value, from among the motion values detected by the motion detector, of the image frame with the adjusted reference value,
wherein, in response to the motion value of the image frame being higher than or equal to the adjusted reference value as compared by the controller, the controller is further configured to decrease the brightness value of the image frame, and
wherein, in response to the motion value of the image frame being lower than the adjusted reference value as compared by the controller, the controller is configured to increase the brightness value of the image frame.

15. The display apparatus of claim 14, wherein the controller is further configured to readjust the adjusted reference value based on the brightness value and an average brightness value of the image frame and to readjust the brightness value of the image frame based on the readjusted reference value and the motion value of the image frame detected by the motion detector.
